# EUROPÄISCHE PATENTANMELDUNG

(11) **EP 3 459 406 A2**
(43) Veröffentlichungstag der Anmeldung: **27.03.2019**
(21) Anmeldenummer: 18195483.5
(22) Anmeldetag: 19.09.2018
(51) Int. Cl.: A47J 37/06

(54) **HOCHTEMPERATUR-GASGRILLGERÄT**

(30) Priorität: 21.09.2017 DE 102017121872
(71) Anmelder: Metallverarbeitung Uwe Ebertz GmbH, 35764 Sinn-Fleisbach (DE)
(72) Erfinder: Ebertz, Uwe, 35764 Sinn-Fleisbach (DE)
(74) Vertreter: Braun-Dullaeus Pannen Emmerling Patent- und Rechtsanwaltspartnerschaft mbB

(57) **Zusammenfassung**

Hochtemperatur-Gasgrillgerät zum Grillen von Grillgut, umfassend
einen keramischen Platten-Gasbrenner als Heizquelle, der Temperaturen von über 800°C erzeugt,
ein Gehäuse, das einen inneren Grillraum und eine Außenverkleidung aufweist,
wobei eine Grillgut-Halterung in dem inneren Grillraum vorgesehen ist, wobei die Außenverkleidung an einer Oberseite des Gehäuses über dem Gasbrenner eine wannenartige Vertiefung aufweist, die mittels der Abwärme des Gasbrenners erhitzt wird und wobei die wannenartige Vertiefung vorgesehen ist, um einen Behälter zum Aufnehmen und/oder Garen von Speisen aufzunehmen.

## Beschreibung

Die Erfindung betrifft ein Hochtemperatur-Gasgrillgerät zum Grillen von Grillgut, wobei das Hochtemperatur-Gasgrillgerät einen keramischen Platten-Gasbrenner als Heizquelle aufweist, der Temperaturen von über 800°C erzeugt. Zudem umfasst das Hochtemperatur-Gasgrillgerät ein Gehäuse, das einen inneren Grillraum und eine Außenverkleidung aufweist, wobei eine Grillgut-Halterung in dem inneren Grillraum vorgesehen ist.

Aus der DE 20 2013 003 911 U1 ist ein Hochtemperatur-Gasgrillgerät bekannt bei dem der Gasbrenner oberhalb des Grillraums angeordnet ist und das Grillgut somit mit Oberhitze von über 800°C gegrillt werden kann. Mittels eines stufenlos höhenverstellbaren Grillrosts kann der Gargrad bzw. die Grillzeit durch den Anwender frei festgelegt werden.

Aus der DE 20 2014 101 826 U1 ist ein Hochtemperatur-Gasgrillgerät bekannt bei dem der Gasbrenner oberhalb des Grillraums angeordnet ist, wobei in einem inneren Grillraum Lüftungsöffnungen vorgesehen sind, sodass Verbrennungsgase aus dem inneren Grillraum in einer Art abgeführt werden, dass diese Verbrennungsgase möglichst nicht die Frischluftzufuhr des Gasbrenners beeinträchtigen.

In der DE 20 2014 101 826 U1 sind der innere Grillraum und der Gasbrenner von einer Außenverkleidung mit einer Luftisolierungsschicht umgeben, deren Zweck es ist, dass die hohen Temperaturen des Gasbrenners nicht direkt auf die Außenverkleidung des Gasgrillgeräts wirken, sodass die Gefahr reduziert wird, dass sich der Anwender Verbrennungen durch heiße Blechteile zuzieht.

Nachteilig wird bei den bekannten Grillgeräten die Hitze des Gasbrenners lediglich zum Grillen des Grillguts verwendet, wodurch die bekannten Grillgeräte energetisch ineffizient arbeiten.

Der Erfindung liegt daher die Aufgabe zu Grunde, ein Hochtemperatur-Gasgrillgerät bereitzustellen, welches die Hitze des Gasbrenners energetisch effizient nutzt.

Die der Erfindung zu Grunde liegende Aufgabe wird mit einem Hochtemperatur-Gasgrillgerät gemäß Anspruch 1 gelöst. Bevorzugte Ausführungsformen der Erfindung können den Unteransprüchen entnommen werden.

Der Kerngedanke der Erfindung liegt darin, dass die Außenverkleidung an einer Oberseite des Gehäuses über dem Gasbrenner eine wannenartige Vertiefung aufweist, die mittels der Abwärme des Gasbrenners erhitzt wird, wobei die wannenartige Vertiefung vorgesehen ist, um einen Behälter zum Aufnehmen und/oder Garen von Speisen aufzunehmen. Die Abwärme des Gasbrenners wird also effektiv genutzt, indem Speisen in dem Behälter warm gehalten, erwärmt bzw. gegart werden können. Je näher die wannenartige Vertiefung an dem Gasbrenner angeordnet ist, desto effizienter kann die Abwärme genutzt werden. Sind die wannenartige Vertiefung sowohl als auch der Behälter aus einem gut wärmeleitenden Material, wie beispielsweise Stahl, Blech oder Alu, und bilden die wannenartige Vertiefung und der Behälter eine gemeinsame Kontaktfläche aus, wird die Temperatur in dem Behälter weiter erhöht und eine weitere Effizienzsteigerung erzielt.

Bevorzugt ist der Behälter ein Gastronorm-Behälter. Gastronorm-Behälter sind in vorgegebenen Standardabmessungen erhältlich, sodass der Behälter einfach ausgetauscht werden kann bzw. dass beispielsweise ein Party-Service die Gastronorm-Behälter verwenden kann, die ohnehin in dessen Bestand lagern. Es sind also keine aufwendigen Einzelanfertigungen notwendig.

Eine wasserdichte wannenartige Vertiefung ermöglicht es, dass der Gastronorm-Behälter in eine Art heizbares Wasserbad eingebracht werden kann, sodass Speisen mit einem weiteren Temperaturprofil bekocht werden können und vorteilhaft nicht anbrennen. Insbesondere kann das Wasserbad auch als ein Wärmespeicher dienen, sodass auch wenn der Gasbrenner ausgeschaltet ist noch Hitze an den Behälter durch das Wasserbad abgegeben wird.

Bevorzugt ist der Gasbrenner zwischen dem Grillraum und der wannenartigen Vertiefung angeordnet. Hierdurch wird ermöglicht, dass die Hitze bzw. die Abwärme des Gasbrenners möglichst effektiv an die wannenartige Vertiefung weitergeleitet wird, da der Gasbrenner in direkter Nachbarschaft zu der wannenartigen Vertiefung angeordnet ist und mit dieser bevorzugt eine gemeinsame Kontaktfläche ausbildet. Der innere Grillraum wird somit durch Oberhitze geheizt, was ferner vorteilhaft dazu führt, dass kein Fleischsaft des Grillguts in den Gasbrenner tropfen kann.

Alternativ ist der Gasbrenner links und rechts neben dem inneren Grillraum angeordnet. In diesem Fall ist der Gasbrenner dahingehend zweistückig ausgebildet, dass das Grillgut in der Art eines Toasters von beiden Seiten gleichzeitig mit Hochtemperatur erhitzt/gegrillt wird. Die eine Seite des Grillguts kühlt also nicht ab, während die andere Seite erhitzt wird. Es findet quasi ein symmetrisches Grillen beider Seiten des Grillguts statt. Vorteilhaft wird die Grilldauer um die Hälfte reduziert. Die Abwärme der beiden Heizquellen ist ausreichend, um den Behälter mit den Speisen zu erhitzen. Zusätzlich ist eine Grillgut-Halterung vorgesehen, die das Grillgut nicht wie in der üblichen Weise waagrecht, sondern vertikal hält. Diese Grillgut-Halterung ist in der Art eines zweiteiligen Grillrosts ausgebildet, der das Grillgut sanft, aber dennoch fest eingeklemmt, sodass es vertikal nicht aus der Grillgut-Halterung herausrutschen kann.

In einer vorteilhaften Ausgestaltung ist zwischen dem Brennraum des Gasbrenners und der wannenartigen Vertiefung ein Luftspalt zur gleichmäßigen Hitzeverteilung am Bodenbereich der wannenartigen Vertiefung vorgesehen. Weist der Gasbrenner eine kleinere horizontale Fläche als die wannenartige Vertiefung auf, führt eine gemeinsame Kontaktfläche des Gasbrenners und der wannenartigen Vertiefung dazu, dass der Bodenbereich der wannenartigen Vertiefung ungleichmäßig stark beheizt wird. Die Bereiche, die nämlich in einem direkten Kontakt über dem Gasbrenner sind, werden stärker erhitzt als die restlichen Bereiche. Dieser ungleichmäßigen Hitzeverteilung wird durch den Luftspalt vorgebeugt, wobei die Dicke des Luftspalts dahingehend gewählt wird, dass ein Optimum zwischen gleichmäßiger Hitzeverteilung und Nutzung der Abwärme angestrebt wird. Bevorzugt ist der Luftspalt kleiner als 15 cm, besonders bevorzugt ist der Luftspalt kleiner als 5 cm ausgebildet.

In einer vorteilhaften Ausgestaltung der Erfindung ist die Grillgut-Halterung mittels einer Linearführung gehalten und in vertikaler Richtung verschiebbar angebracht. Die Linearführung ermöglicht ein besonders leichtgängiges Verschieben der Grillgut-Halterung. Die Linearführung ist hierbei in einem Zwischenraum zwischen der Außenverkleidung und dem inneren Grillraum angeordnet. Die Linearführung umfasst vorteilhaft eine Schiene entlang deren Erstreckung eine Laufbahn vorgesehen ist, wobei auf der Laufbahn ein Aufsatz gleitet, der bewegliche Laufelemente mit einer kugelförmigen Lauffläche aufweist. Die beweglichen Laufelemente sind beispielsweise als Rollen oder Kugeln ausgebildet. Aufgrund der hohen Temperaturen im inneren Grillraum besteht die Gefahr, dass die Linearführung aufgrund einer temperaturbedingten Materialausdehnung ihre Leichtläufigekeit einbüßt. Um dies zu verhindern, sind in der Außenverkleidung Aussparungen vorgesehen, sodass Außenluft in den Zwischenraum einströmt und die Linearführung abkühlt. Alternativ ist statt der Linearführung eine Kreuz-Linearführung vorgesehen. Die Kreuz-Linearführung ist dahingehend eine Weiterentwicklung der Linearführung, als dass die Grillgut-Halterung nunmehr zusätzlich zur vertikalen Verschiebung auch horizontal verschoben werden kann. Das Grillgut kann durch die Kreuz-Linearführung also auch horizontal nach vorne auf der Grillgut-Halterung aus dem inneren Grillraum herausgebracht werden, was das Wenden des Grillguts viel komfortabler und leichter macht. Eine Verbrennungsgefahr wird minimiert, da man das Grillgut mit der Kreuz-Linearführung weiter vom inneren Grillraum entfernt wendet bzw. nach dem Grillen herausholt.

Bevorzugt weist die Grillgut-Halterung eine Grillauflage und einen in Rastpositionen verfahrbaren F-förmigen Arm auf, dessen innenliegender abgekanteter Abschnitt an der Linearführung gehalten ist. Der F-förmigen Arm wird hierbei im Wesentlichen durch einen Fußbereich und einen Kopfbereich ausgebildet. Unter dem Fußbereich wird in der vorliegenden Anmeldung der Bereich des Buchstabens "F" verstanden auf dem der geschriebene Buchstabe aufsteht und unter dem Kopfbereich werden die beide oben angeordneten abgekanteten Abschnitte des Buchstabens "F" bezeichnet. Die Grillauflage ist im Bereich der geraden Erstreckung vom Kopf- bis zum Fußbereich des F-förmigen Arms angeordnet, wobei die beiden abgekanteten Abschnitte des Kopfbereichs für den Verfahrmechanismus der Verschiebevorrichtung vorgesehen sind. Stellt man sich den geschriebenen Buchstaben "F" als dreidimensionale Struktur vor, und führt an diesem zunächst eine Drehung um -90° bzgl. der in die Leseansicht eingehenden Achse durch und führt anschließend eine 90° Kippbewegung um die nunmehr horizontal angeordnete Längsachse des "F" durch, so entspricht dies der Orientierung des F-förmigen Arms an dem Grillgerät. Vorzugsweise weist die Erstreckung des F-förmigen Arms vom Kopfbereich zum Fußbereich eine horizontal vorgesehene U-förmige Aussparung vor dem Grillraum auf. An der Innenseite der U-förmigen Aussparung sind kleine Überstände vorgesehen, die eine waagrechte Ebene ausbilden und auf die die Grillauflage fest, aber dennoch einfach lösbar aufbringbar ist. Hierzu weist die Grillauflage bevorzugt passgenaue Ausnehmungen auf.

In einer vorteilhaften Ausgestaltung der Erfindung ist der innenliegende, also dem Fußbereich zugewandte, abgekanteten Abschnitt des F-förmigen Arms in eine schlitzförmige Aussparung der Außenverkleidung auf der Frontseite des Gasgrillgeräts einführbar, welche seitlich vom inneren Grillraum angeordnet ist. Der außenliegende abgekantete Abschnitt des F-förmigen Arms liegt außen an der Außenverkleidung an einem Seitenbereich des Grillgeräts an. In diesem Seitenbereich weist die Außenverkleidung des Gasgrillgeräts Aussparungen für Rastpositionen auf. Der abgekantete F-förmige Abschnitt weist ebenfalls eine Aussparung auf und zwar an einer Stelle, die man sehen würde, wenn man von oben auf den Buchstaben F blickt und sich diesen als dreidimensionales Gebilde vorstellt. Ein Ziehgriff durchsetzt sowohl die Aussparungen für die Rastpositionen als auch die Aussparung des F-förmigen Arms. Mittels des Ziehgriffs kann die Grill-Halterung an der Außenverkleidung des Grillgeräts fixiert und verschiedene horizontale oder vertikale Positionen innerhalb des Grillraums angefahren werden. Dadurch, dass die Grillgut-Halterung an dem Seitenbereich verschiebbar ist, kann der Anwender den Abstand des Grillguts zum Gasbrenner leicht verändern, ohne dass er direkt der Hitze des inneren Grillraums ausgesetzt ist. Vorteilhaft wird hierdurch die Verbrennungsgefahr reduziert.

Durch Betätigung einer Verschiebevorrichtung, welche zumindest den Ziehgriff und die Linearführung umfasst, ist die Grillgut-Halterung an diesem Seitenbereich verlagerbar angeordnet. Der innenliegende abgekantete Abschnitt des F-förmigen Arms ist in der schlitzförmigen Aussparung zwischen dem inneren Grillraum und der Außenverkleidung eingebracht. In diesem Zwischenraum ist der innenliegende abgekantete Abschnitt verfahrbar an der Linearführung angeordnet, wobei durch ein Federsystem eine leichte Verfahrbarkeit der Verschiebevorrichtung zusätzlich bereitgestellt ist, indem das Federsystem ebenfalls an dem innen liegenden abgekanteten Abschnitt angreift und gegenüber dessen Gewichtskraft vorgespannt ist.

In einer bevorzugten Ausgestaltung ist die Grillgut-Halterung vertikal und/oder horizontal verlagerbar. Die vertikale Verfahrbarkeit ist bei dem Heizen/Grillen mit Oberhitze vorgesehen, wenn der Abstand zu dem Gasbrenner durch den Anwender verändert werden soll, um beispielsweise eine kürzere Grillzeit zu erreichen. Die horizontale Verfahrbarkeit der Grillgut-Halterung aus dem inneren Grillraum hinaus ist notwendig, wenn das Grillgut in der Art eines Toasters mit den beiden seitlich angeordneten Gasbrennern betrieben wird. Hierbei kann das Grillgut nicht einfach mittels einer Zange auf die Grillauflage aufgelegt werden, sondern die Grillgut-Halterung wird zunächst aus dem inneren Grillraum ausgebracht, wobei in einem nächsten Schritt das Grillgut eingebracht wird und die Grillgut-Halterung anschließend wieder in den Grillraum verfahren wird.

Am Grillgerät kann zusätzlich eine Uhr mit einer Timer-Funktion vorgesehen sein. Durch die extrem hohen Temperaturen des Grillgeräts und die dadurch resultierende sehr kurze Grillzeit ist es wichtig, dass das Grillgut sekundengenau aus dem Grillraum herausgeholt wird, da es sonst für verkohlen bzw. verbrennen kann. Die Timer-Funktion informiert den Nutzer bevorzugt durch einen Signalton, dass eine zuvor angegebene Zeit abgelaufen ist. Die Timer-Funktion kann Tasten mit voreingestellten Zeitintervallen umfassen als auch von dem Nutzer beliebig programmiert werden.

Nachfolgend wird die Erfindung anhand von in den Zeichnungen dargestellter Ausführungsbeispiele näher erläutert. Es zeigen:
- Fig. 1: eine perspektivische Darstellung eines ersten Ausführungsbeispiels eines Hochtemperatur-Gasgrillgeräts;
- Fig. 2: einen vertikalen Längsschnitt durch die Mitte des Gehäuses des ersten Ausführungsbeispiels des Hochtemperatur-Gasgrillgeräts;
- Fig. 3: einen weiteren vertikalen Längsschnitt durch einen Außenbereich des Gehäuses des ersten Ausführungsbeispiels des Hochtemperatur-Gasgrillgeräts mit einer Linearführung;
- Fig. 4: eine Draufsicht auf das erste Ausführungsbeispiel des Hochtemperatur-Gasgrillgeräts;
- Fig. 5: einen horizontalen Querschnitt eines zweiten Ausführungsbeispiels des Hochtemperatur-Gasgrillgeräts;
- Fig. 6: das Hochtemperatur-Gasgrillgerät aus Fig. 5 in einer Schnittdarstellung von der Seite und
- Fig. 7: das Hochtemperatur-Gasgrillgerät aus Fig. 5 in einer Vorderansicht.

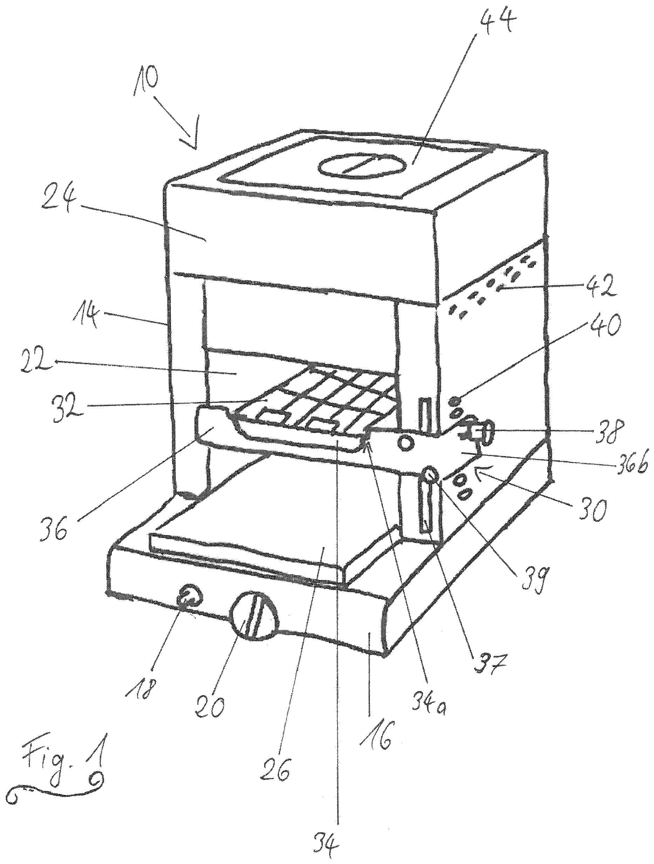

In Fig. 1 ist die perspektivische Darstellung eines ersten Ausführungsbeispiels des Hochtemperatur-Gasgrillgeräts 10 gezeigt. Das Gehäuse 14 ist auf einen Bodenbereich 16 des Gasgrillgeräts 10 aufgebracht, wobei sich der Bodenbereich 16 über das restliche Gehäuse 14 jenseits eines Öffnungsbereichs zu einem inneren Grillraum 22 hinaus erstreckt. An der Frontseite des Bodenbereichs 16 sind ein Zünder 18 zum Anzünden einer Gasflamme und ein Gasregler 20, insbesondere zum Aus- bzw. Anschalten der Gaszufuhr, angebracht. Eine U-förmige Frontseite der Außenverkleidung 24 begrenzt einen Zugang zu dem inneren Grillraum 22.

Dadurch, dass sich der Bodenbereich 16 über das restliche Gehäuse 14 hinaus erstreckt, können der Zünder 18 unter Gasregler 20 von einem Anwender verwendet werden, ohne dass dieser der Hitze des inneren Grillraums 22 zu nahekommt.

Zwischen dem inneren Grillraum 22 und der Außenverkleidung 24 sind zumindest an der Rückseite und an den Seiten des Gasgrills 10 jeweils luftgefüllte Zwischenräume vorgesehen. Auf dem Bodenbereich 16 liegt im inneren Grillraum 22 eine Auffangwanne 26, die sich über den inneren Grillraum 22 hinaus bis in die Nähe des Gasreglers 20 erstreckt. In der Auffangwanne 26 wird herabtropfende Flüssigkeit des Grillguts, beispielsweise eines Steaks, gesammelt. Der innere Grillraum 22 weist außer seiner frontalen Öffnung keine Öffnungen auf, sodass insbesondere kein Rauch und/oder keine Flüssigkeit des Grillguts in die Zwischenräume zwischen dem inneren Grillraum und der Außenverkleidung gelangen kann. Dies ist besonders vorteilhaft, da diese inneren Zwischenräume gar nicht oder nur mit großem Aufwand gereinigt werden können.

Im inneren Grillraum 22 ist eine Grillauflage 32 auf einer Grillgut-Halterung 30 gelagert. Hierzu weist die Grillgut-Halterung 30 einen F-förmigen Arm 36 auf, welcher wie noch näher beschrieben wird, an das Gehäuse 14 angebracht ist. In einer Frontalansicht zeigt sich eine U-förmige Aussparung 34 entlang der Erstreckung der längsten Seite des F-förmigen Arms 36, wobei entlang der inneren Seitenflächen der U-förmigen Aussparung 34 symmetrisch zwei Vorsprünge 34a vorgesehen sind, welche eine horizontale Ebene ausbilden und auf welche die Grillauflage 32 aufgelegt wird.

Der innenliegende abgekanteten Abschnitt 36a des F-förmigen Arms 36 durchsetzt eine schlitzförmige Öffnung 37 des Gehäuses 14 und ist in dem entsprechenden Zwischenraum zwischen dem inneren Grillraum 22 und der Außenverkleidung 24 an einer, noch näher zu beschreibenden, Verschiebevorrichtung 60 angebracht. Der außenliegende abgekantete Abschnitt 36b des F-förmigen Arms 36 liegt an der seitlichen Außenverkleidung 24 über Aussparungen für Rastpositionen 40 an. Der außenliegender abgekanteten Abschnitt 36b weist eine Aussparung auf, die von einem Ziehgriff 38 durchsetzt wird. Ein Stift des Ziehgriffs 38 durchsetzt zudem eine der Rastpositionen 40, sodass die Grillgut-Halterung 30 bezüglich der Höhenverstellung an das Gehäuse 14 fixierbar ist. Durch eine Betätigung des Ziehgriffs 38 kann eine neue Rastposition 40 ausgewählt und die Höhe der Grillauflage 32 verändert werden. Aus herstellungstechnischen Gründen ist der F-förmige Arm 36 zweistückig ausgebildet, wobei der innenliegende abgekantete Abschnitt 36a mittels zweier Befestigungselemente 39 an den Arm 36 fixiert ist.

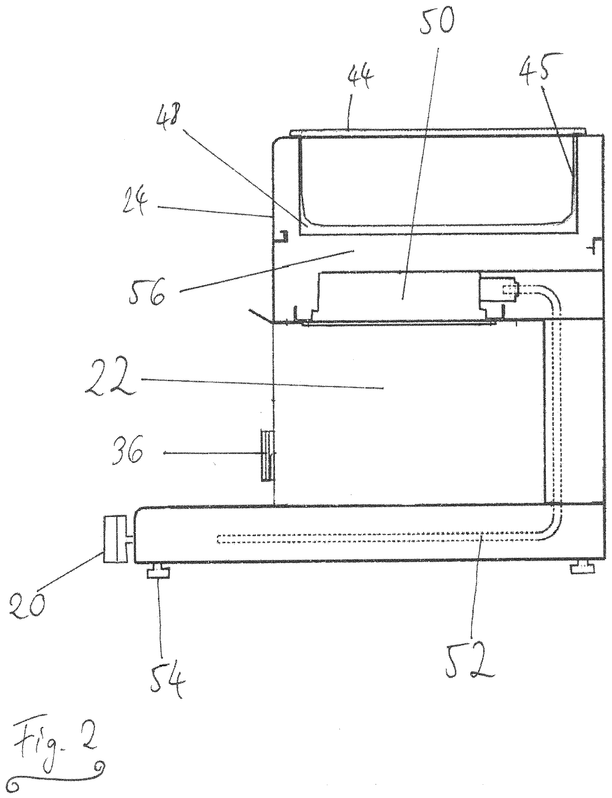

In einem oberen Bereich des Gehäuses 14 sind Lüftungsöffnungen 42 in die Außenverkleidung 24 eingebracht. Die perspektivische Darstellung zeigt zudem einen Deckel 44, welcher den Gastronorm-Behälter 45 (dargestellt in Fig. 2) überdeckt. In dem Gastronorm-Behälter 45 können etwa Kartoffelknödel, Kroketten, Gemüse, Saucen oder auch andere Speisen durch die Abwärme eines keramischen Platten-Gasbrenners 50 warmgehalten bzw. erwärmt werden.

Fig. 2 zeigt in einer mittigen Schnittansicht durch die Längsachse des Gehäuses 14 eine wannenartige Vertiefung 48 der Außenverkleidung 24. In dieser wannenartigen Vertiefung 48 ist der Gastronorm-Behälter 45 gelagert und mit dem Deckel 44 verdeckt, sodass die Abwärme möglichst effizient im Gastronorm-Behälter 45 gespeichert werden kann. Die Abmessungen der wannenartigen Vertiefung 48 sind bezüglich einer jeden Raumrichtung etwas größer als die Abmessungen des Gastronorm-Behälters 45, sodass der Gastronorm Behälter 45 leicht in die wannenartige Vertiefung 48 eingebracht werden kann. Unter der wannenartigen Vertiefung 48 ist ein Luftspalt 56 vorgesehen, der direkt an den keramischen Platten-Gasbrenner 50 angrenzt. Der keramische Platten-Gasbrenner 50 heizt den inneren Grillraum 22, zumindest abschnittsweise mit über 800°C, wobei die Abwärme des keramischen Platten-Gasbrenners 50 zugleich die wannenartige Vertiefung 48 aufheizt, welche ihrerseits die Wärme an den Gastronorm-Behälter 45 weitergibt. Schematisch ist in Fig. 2 zudem eine Gasleitung 52 skizziert, welche den Gasbrenner 50 mit frischem Gas versorgt. Standfüße 45 sorgen für einen stabilen Stand des Gasgrillgeräts 10 und können so justiert werden, dass das Grillgerät 10 waagrecht ausgerichtet ist und einen stabilen Stand aufweist.

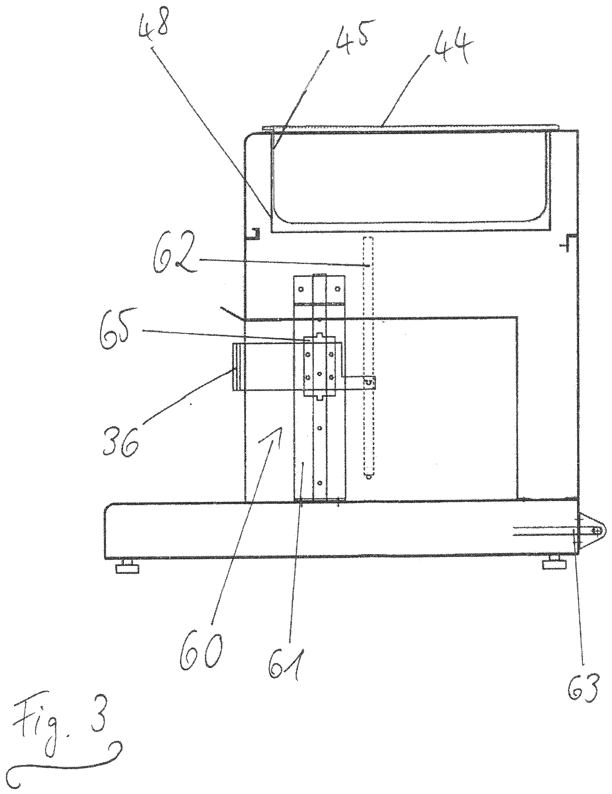

Fig. 3 zeigt in einer Schnittansicht eines außenliegenden Bereichs des Gehäuses 14 entlang der horizontalen Erstreckung der schlitzförmigen Öffnung 37 die Verschiebevorrichtung 60, welche eine Schiene 61, ein Federsystem 62 und eine Linearführung 65 umfasst. Der innenliegende abgekanteten Abschnitt 36a gleitet leichtgängig vertikal entlang der Linearführung 65, die an der Schiene 61 angeordnet ist, wobei das Federsystem 62, welches an dem innenliegenden abgekanteten Abschnitt 36a angebracht ist, eine leichtgängige Bewegung des Verschiebevorrichtung 60 durch eine der Gewichtskraft der Grillgut-Halterung 30 entgegengesetzte Vorspannung zusätzlich unterstützt. Die Lüftungsöffnungen 42 sorgen für einen Luftstrom zwischen dem inneren Grillraum 22 und der Außenverkleidung 24, wodurch die Linearführung 65 gekühlt wird, sodass einer temperaturabhängigen Materialausdehnung vorgebeugt wird, die die Leichtläufigkeit der Linearführung negativ beeinflussen können. Das Gas wird vermittels des rückseitig am Bodenbereich 16 des Gehäuses angebrachten Gaseingangs 63 in das Gasgrillgerät 10 eingespeist.

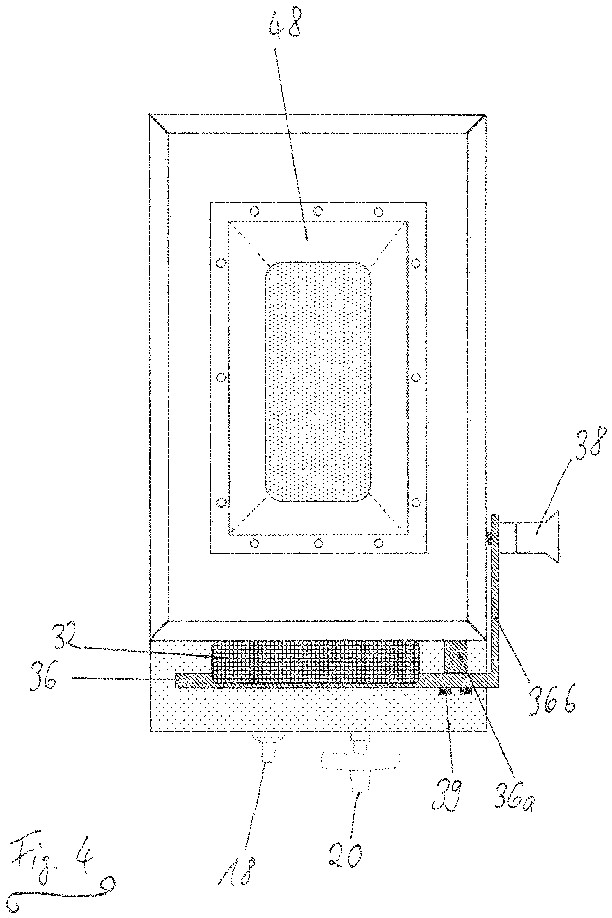

Fig. 4 zeigt eine Draufsicht auf das Gasgrillgerät 10 ohne den Deckel 44. Die wannenartige Vertiefung 48 ist mittig auf der Oberseite des Gasgrillgeräts 10 angeordnet.

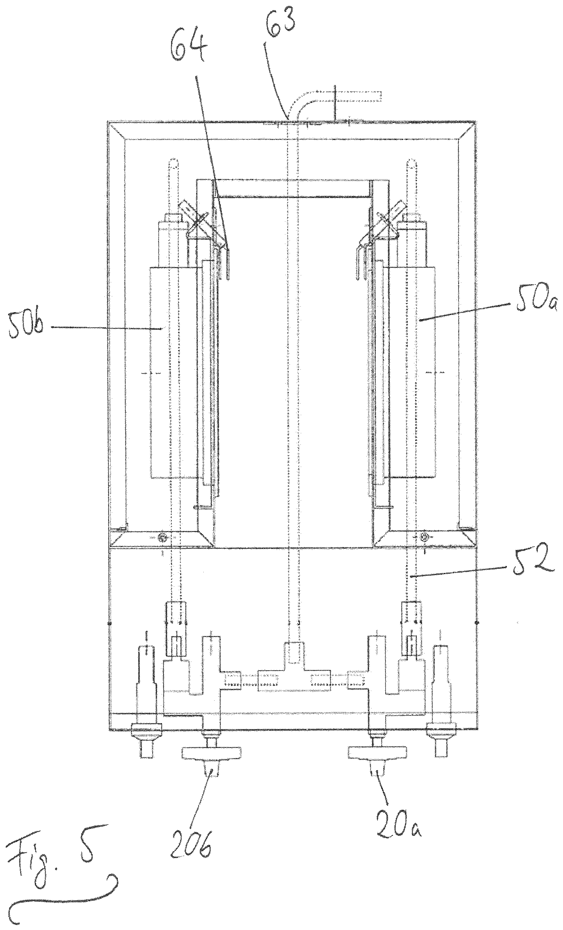

Fig. 5 zeigt in einem horizontalen Querschnitt ein zweites Ausführungsbeispiel des Gasgrills 10. Das Gas wird wiederum vermittels der rückseitig angebrachten Gaszufuhr 63 in das Gasgrillgerät 10 eingespeist. Von dort verläuft es in Richtung der vorderseitig im Bodenbereich 16 angebrachten Gasregler 20a, b. Mittels eines T-förmigen Verteilungsrohrs wird das Gas hierzu ausgehend von der einen Gasleitung 52 an die beiden Gasregler 20a, b umgeleitet. Die Gasregler 20a, b regulieren jeweils die Gaszufuhr für einen ihnen zugeordneten Gasbrenner 50a, b. Im Gegensatz zu dem ersten Ausführungsbeispiel sind nun also zwei anstatt eines keramischen Platten-Gasbrenners 50 vorgesehen, wobei diese links und rechts neben dem inneren Grillraum 22 versetzt angeordnet sind. Das Grillgut kann durch diese Anordnung in dem inneren Grillraum 22 von zwei Seiten zugleich und gleichmäßig erhitzt bzw. gegrillt werden, was die Zubereitungszeit reduziert und zu einem gleichmäßigen Grillergebnis beider Seiten des Grillguts führt. Aus Sicherheitsaspekten stellen Temperatursensoren 64 sicher, dass kein Gas in den inneren Grillraum 22 einströmen kann, wenn die Gasbrenner 50a, b nicht in Betrieb sind.

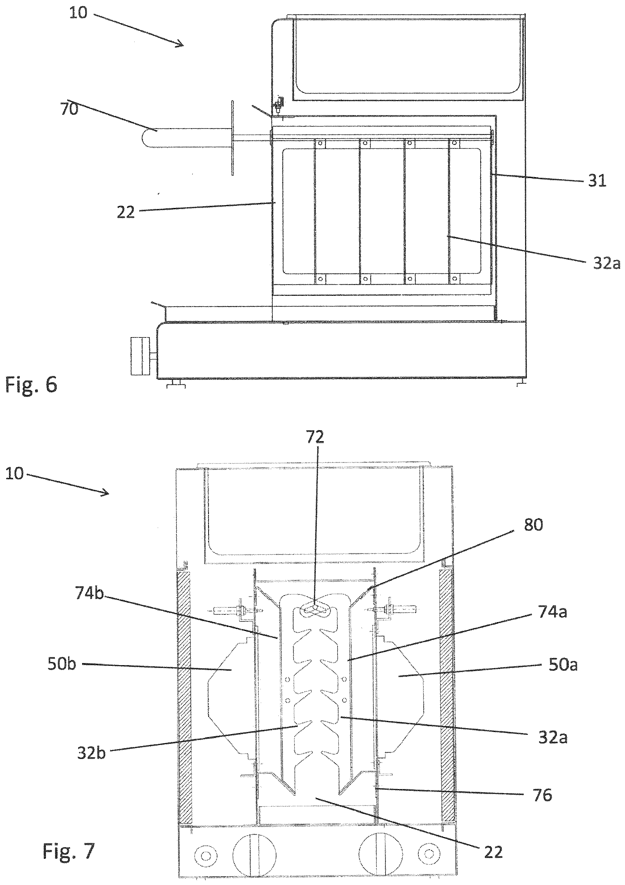

Fig. 6 zeigt das zweite Ausführungsbeispiel des Hochtemperatur-Gasgrillgeräts 10 aus Fig. 5 in einer Schnittdarstellung von der Seite. Wenn das Grillgut, wie in Fig. 5 gezeigt, seitlich von den beiden Gasbrenner 50a, b gegrillt werden soll, kommt die Hitze nun nicht mehr von oben, sondern von der Seite, sodass die Grillgut-Halterung 30 aus Fig. 1, beispielsweise für ein Steak, nicht mehr gut zu gebrauchen wäre, da die ihr zugeordnete Grillauflage 32 so aufgebracht werden muss, dass das Grillgut horizontal aufliegt.

Aus diesem Grund wird bei der Verwendung der beiden seitlich angeordneten Gasbrenner 50a, b eine weitere Grillgut-Halterung 31 verwendet. Weitere Grillauflagen 32a, b, die an die weitere Grillgut-Halterung 31 angebracht werden, sind dergestalt angeordnet, dass das Grillgut in ihnen vertikal gehalten wird, sodass, beispielsweise bei einem Steak, beide Seiten gleichzeitig gegrillt werden können. Fig. 6 zeigt, dass die weitere Grillgut-Halterung 31 mittels eines Haltestabs 70 in den inneren Grillraum 22 eingebracht wird.

Fig. 7 zeigt, die weitere Grillgut-Halterung 31 in einer Vorderansicht, wobei diese zweiteilig aus den zwei weiteren Grillauflagen 32a, b ausgebildet ist, welche vermittels eines Scharniers 72 beweglich verbunden sind. Der Haltestab 70 kann so in das Scharnier 72 eingebracht werden, dass dieser das Scharniergelenk ausbildet. Die Grillauflagen 32a, b weisen auf denen ihnen gegenseitig zugewandten Seiten eine zackenartige Struktur auf, wobei diese Zacken bei der Einbringung der Grillgut-Halterung 31 in das Grillgerät 10 nach oben gerichtet sind, sodass das Grillgut sicher gehalten wird und nicht nach unten auf den Boden des Grillgeräts 10 rutscht, da sich die Zacken in das Grillgut hineindrücken und dieses halten. Auf den anderen Seiten der Grillauflagen 32a, b sind jeweils länglich metallische Schienen 74a, b fest angebracht. An ihren jeweiligen oberen Enden weisen die metallischen Schienen 74a, b symmetrisch eine Abknickung nach außen und an ihren jeweiligen unteren Enden eine Abknickung nach innen auf. Diese insgesamt vier Abknickungen werden auf eine Haltestruktur 76 aufgesetzt, die vier nach unten abgeknickte Winkelelemente 80 aufweist, die bezüglich ihres seitlichen Abstands und ihres Höhenabstands so vorgesehen sind, dass die weitere Grillgut-Halterung 31 selbstzentrierend auf die Haltestruktur 76 aufgesetzt werden kann. Das Grillgut wird demnach von beiden Seiten gleichzeitig und mit gleichem Abstand zu den Gasbrenner 50a, b gegrillt und kann schon nach der Hälfte der Zeit aus dem inneren Grillraum 22 verzehrfertig herausgeholt werden.

## Patentansprüche

1. Hochtemperatur-Gasgrillgerät zum Grillen von Grillgut, umfassend
einen keramischen Platten-Gasbrenner (50) als Heizquelle, der Temperaturen von über 800°C erzeugt,
ein Gehäuse (14), das einen inneren Grillraum (22) und eine Außenverkleidung (24) aufweist, wobei
eine Grillgut-Halterung (30) in dem inneren Grillraum (22) vorgesehen ist,
**dadurch gekennzeichnet,**
**dass** die Außenverkleidung (22) an einer Oberseite des Gehäuses (14) über dem Gasbrenner (50) eine wannenartige Vertiefung (48) aufweist, die mittels der Abwärme des Gasbrenners (50) erhitzt wird, und
**dass** die wannenartige Vertiefung (48) eingerichtet ist, um einen entsprechend gestalteten Behälter (45) zum Aufnehmen und/oder Garen von Speisen halten.

2. Hochtemperatur-Gasgrillgerät nach Anspruch 1, **dadurch gekennzeichnet, dass** die wannenartige Vertiefung (48) eingerichtet ist, einen genormten Gastronorm-Behälter (45) zu halten, der herausnehmbar in die wannenartige Vertiefung (48) einsetzbar ist.

3. Hochtemperatur-Gasgrillgerät nach einem der Ansprüche 1 bis 2, **dadurch gekennzeichnet, dass** die wannenartige Vertiefung (48) wasserdicht ist und insbesondere einen verschließbaren Ablauf für eingegebenes Wasser aufweist.

4. Hochtemperatur-Gasgrillgerät nach einem der Ansprüche 1 bis 3, **dadurch gekennzeichnet, dass** der Gasbrenner (50) in einem Zwischenraum zwischen dem inneren Grillraum (22) und der wannenartige Vertiefung (48) angeordnet ist, wobei einen isolierenden Abstand zwischen dem Gasbrenner (50) und der wannenartigen Vertiefung (48) bildet.

5. Hochtemperatur-Gasgrillgerät nach einem der Ansprüche 1 bis 3, **dadurch gekennzeichnet, dass** Gasbrenner (50) links und rechts neben dem inneren Grillraum (22) angeordnet sind.

6. Hochtemperatur-Gasgrillgerät nach einem der Ansprüche 4 bis 5, **dadurch gekennzeichnet, dass** zwischen dem Brennraum des Gasbrenners (50) und der wannenartigen Vertiefung (48) ein Luftspalt (56) zur gleichmäßigen Hitzeverteilung am Bodenbereich der wannenartigen Vertiefung (48) vorgesehen ist

7. Hochtemperatur-Gasgrillgerät nach einem der vorhergehenden Ansprüche, **dadurch gekennzeichnet, dass** die Grillgut-Halterung (30) mittels einer Linearführung (65) gehalten und in vertikaler Richtung verschieblich ist.

8. Hochtemperatur-Gasgrillgerät nach Anspruch 7, **dadurch gekennzeichnet, dass** die Grillgut-Halterung (30) eine Grillauflage (32) und einen in Rastpositionen (40) verfahrbaren F-förmigen Arm (36) aufweist, dessen innenliegender abgekanteter Abschnitt (36a) an der Linearführung (65) gehalten ist.

9. Hochtemperatur-Gasgrillgerät nach Anspruch 8, **dadurch gekennzeichnet, dass** der innenliegende abgekantete Abschnitt (36a) des F-förmigen Arms (36) in eine schlitzförmige Aussparung (37) der Außenverkleidung (24) auf der Frontseite des Gasgrillgeräts einführbar ist, und dass der außenliegende abgekantete Abschnitt (36b) des F-förmigen Arms (36) außen an der Außenverkleidung (24) an einem Seitenbereich anliegt.

10. Hochtemperatur-Gasgrillgerät nach Anspruch 9, **dadurch gekennzeichnet, dass** die Grillgut-Halterung (30) durch Betätigung einer Verschiebevorrichtung (60) an diesem Seitenbereich verlagerbar angeordnet ist.

11. Hochtemperatur-Gasgrillgerät nach einem der vorhergehenden Ansprüche, **dadurch gekennzeichnet, dass** die Grillgut-Halterung (30) aus dem inneren Grillraum (22) horizontal ausfahrbar ist.
